# EUROPÄISCHE PATENTSCHRIFT

(11) **EP 3 017 922 B1**
(45) Veröffentlichungstag und Bekanntmachung des Hinweises auf die Patenterteilung: **22.12.2021**
(21) Anmeldenummer: 15002919.7
(22) Anmeldetag: 13.10.2015
(51) Int. Cl.: B27M 1/08, B23Q 11/00

(54) **VERFAHREN ZUR ÜBERWACHUNG DES MASCHINENRAUMES EINER BEARBEITUNGSMASCHINE, VORZUGSWEISE EINER KEHLMASCHINE, SOWIE BEARBEITUNGSMASCHINE, INSBESONDERE KEHLMASCHINE, ZUR DURCHFÜHRUNG EINES SOLCHEN VERFAHRENS**
METHOD FOR MONITORING THE MACHINERY SPACE OF A PROCESSING MACHINE, ESPECIALLY OF A MOULDER, AND PROCESSING MACHINE, IN PARTICULAR A MOULDER, FOR CARRYING OUT SUCH A METHOD
PROCEDE DE SURVEILLANCE DU COMPARTIMENT D'UNE MACHINE D'USINAGE, DE PREFERENCE D'UNE MACHINE A FRAISER, ET MACHINE D'USINAGE, EN PARTICULIER MACHINE A FRAISER, DESTINEE A EXECUTER UN TEL PROCEDE

(30) Priorität: 04.11.2014 DE 102014016628
(43) Veröffentlichungstag der Anmeldung: 11.05.2016
(73) Patentinhaber: Michael Weinig Ag, 97941 Tauberbischofsheim (DE)
(72) Erfinder: GRAMLICH, Rainer, 74747 Ravenstein-Oberwittstadt (DE); KLEIN, Hubert, 97877 Wertheim-Nassig (DE); KUNZ, Rainer, 97999 Igersheim (DE); MARTIN, Peter, 97941 Tauberbischofsheim (DE); RAPP, Walter, 97953 Königheim-Gissigheim (DE); WAGNER, Ralf, 74736 Hardheim (DE)
(74) Vertreter: Jackisch-Kohl, Anna-Katharina

(56) Entgegenhaltungen:
- DE-A1- 19 616 165
- DE-A1- 19 703 813
- DE-A1- 19 741 163
- DE-A1- 19 756 503
- DE-A1-102012 006 124
- DE-C1- 4 237 048
- US-B1- 6 247 511

## Beschreibung

Die Erfindung betrifft ein Verfahren zum Überwachen des Maschinenraumes einer Bearbeitungsmaschine, gemäß dem Oberbegriff des Anspruchs 1 und eine Bearbeitungsmaschine gemäß dem Oberbegriff des Anspruchs 10. Ein solches Verfahren und eine solche Bearbeitungsmaschine sind aus dem Dokument US 6247511 B1 bekannt.

Es ist bekannt, die Werkstücke beim Durchlauf durch eine Bearbeitungsmaschine, insbesondere eine Kehlmaschine, zu bearbeiten. Hierbei werden die Werkstücke mittels Vorschubwalzen an entsprechenden Werkzeugen innerhalb des Maschinenraumes vorbeigeführt, die die Werkstücke an den entsprechenden Seiten bearbeiten, beispielsweise hobeln oder profilieren. Es kann vorkommen, dass die Werkstücke im Maschinenraum hängenbleiben. Insbesondere kann es zu Maschinenschäden kommen, wenn die Werkzeuge in neue bzw. andere Positionen verstellt werden und sich dabei Werkstücke im Kollisionsbereich dieser Werkzeuge befinden. Wenn sich beim Hochfahren der Vorschubwalzen noch Werkstücke im Maschinenraum befinden, können diese von dem Eingriff noch laufender Werkzeuge zurückgeschlagen werden, da die Werkstücke beim Hochfahren von den Vorschubwalzen nicht mehr erfasst und gehalten werden.

Der Erfindung liegt darum die Aufgabe zugrunde, das gattungsgemäße Verfahren und die gattungsgemäße Bearbeitungsmaschine so auszubilden, dass eventuell im Maschinenraum hängengebliebene Werkstücke zuverlässig erfasst werden können.

Diese Aufgabe wird beim gattungsgemäßen Verfahren erfindungsgemäß mit den kennzeichnenden Merkmalen des Anspruchs 1 und bei der gattungsgemäßen Bearbeitungsmaschine erfindungsgemäß mit den kennzeichnenden Merkmalen des Anspruches 10 gelöst.

Beim erfindungsgemäßen Verfahren erzeugt das in den Maschinenraum der Bearbeitungsmaschine einlaufende Werkstück mit seinem in Transportrichtung rückwärtigen Ende im Einlaufbereich ein Startsignal. Beim ordnungsgemäßen Durchlauf wird durch dieses rückwärtige Ende im Auslaufbereich des Maschinenraumes ein Endsignal erzeugt. Die Signale werden einer Steuerung zugeführt, an welche die die Signale erzeugenden Sensoren angeschlossen sind. Sobald das rückwärtige Ende des Werkstückes das Startsignal erzeugt hat, wird ein den theoretischen Vorschubweg charakterisierendes Merkmal erfasst, das der Steuerung zugeführt wird. Wenn das rückwärtige Ende des Werkstückes das Endsignal erzeugt, überprüft die Steuerung, ob der Wert dieses gemessenen charakteristischen Merkmals einen vorgegebenen Grenzwert erreicht hat, vorzugsweise einen vorgegebenen oberen Grenzwert noch nicht überschritten hat. Ist dies der Fall, erzeugt die Steuerung ein Freigabesignal und zeigt damit erfindungsgemäß an, dass im Maschinenraum keine Werkstücke hängengeblieben sind. Alternativ kann die Steuerung auch überwachen, ob das Endsignal durch das rückwärtige Ende des Werkstückes zu einem Zeitpunkt erzeugt wird, zu dem der Wert des von der Steuerung erfassten charakteristischen Merkmals den vorgegebenen Grenzwert erreicht und vorzugsweise den oberen Grenzwert noch nicht überschritten hat. Ist dies der Fall, erzeugt die Steuerung das Freigabesignal, wodurch angezeigt wird, dass die Werkstücke den Maschinenraum ordnungsgemäß durchlaufen haben. Der Grenzwert wird aus dem konstruktiv vorgegebenen Vorschubweg bzw. einem diesen kennzeichnenden Merkmal bestimmt, wobei sich der Grenzwert und der obere Grenzwert durch eine mögliche Toleranz unterscheiden.

Da zum Auslösen der Signale das in Transportrichtung rückwärtige Ende des Werkstückes herangezogen wird, spielt die Länge des Werkstückes selbst keine Rolle. Aus diesem Grunde ist unter einem Werkstück nicht nur ein einzelnes Werkstück zu verstehen, sondern auch ein Werkstückstrang, der aus zwei oder mehr aneinander liegenden Werkstücken besteht. In diesem Fall bildet das rückwärtige Ende dieses Werkstückstranges die Bezugsgröße, welche das Startsignal sowie das Endsignal erzeugt. Somit kann in konstruktiv einfacher Weise und zuverlässig festgestellt werden, ob ein Werkstück bei seinem Durchlauf durch die Bearbeitungsmaschine hängengeblieben ist.

Wird kein Endsignal durch ein Werkstück erzeugt, dann ist es auf seinem Weg vom Einlauf zum Auslauf der Bearbeitungsmaschine hängengeblieben. Dann wird auch kein Freigabesignal von der Steuerung erzeugt.

Wenn das Werkstück mit seinem rückwärtigen Ende beim Einlauf in den Maschinenraum der Bearbeitungsmaschine das Startsignal erzeugt, wird bei einer vorteilhaften Ausführungsform der theoretische Vorschubweg des Werkstückes von der Drehung einer Antriebswelle für ein Transportelement der Bearbeitungsmaschine abgeleitet. So kann die Zahl der Umdrehungen der Antriebswelle durch entsprechende Sensoren oder einen Drehgeber erfasst und der Steuerung zugeführt werden. Die Zählung der Umdrehungen der Antriebswelle ist ein Maß für den theoretischen Vorschubweg, den das Werkstück beim ordnungsgemäßen und störungsfreien Durchlauf durch den Maschinenraum zurücklegt. Sobald dieser über die Zahl der Umdrehungen der Antriebswelle erfasste theoretische Vorschubweg den Wert des konstruktiv festgelegten Vorschubwegs, der durch die Werkstückpositionen, an denen das Start- und Endsignal erzeugt werden, vorgegeben ist, erreicht hat, erwartet die Steuerung das Endsignal, das durch das rückwärtige Ende des Werkstückes ausgelöst werden muss.

Bei einer anderen Ausführung ist das charakteristische Merkmal der Vorschubweg selbst. Da eine Umdrehung der Antriebswelle einem bestimmten Vorschubweg des Werkstückes entspricht, wird die Zahl der Umdrehungen der Antriebswelle steuerungsmäßig direkt in einen Vorschubweg umgesetzt, der der Steuerung zugeführt wird. Die Steuerung vergleicht den erfassten theoretischen Vorschubweg des Werkstückes mit dem konstruktiv vorgegebenen Vorschubweg. Sobald der erfasste theoretische Vorschubweg den konstruktiv vorgegebenen Vorschubweg erreicht hat, erwartet die Steuerung das Endsignal.

Schließlich ist es auch möglich, dass die Steuerung ein Zeitfenster überwacht, das durch den zeitlichen Abstand zwischen dem Startsignal und dem Endsignal festgelegt wird. Da der Steuerung der konstruktiv vorgegebene Vorschubweg bekannt ist, kann aus der Vorschubgeschwindigkeit der zeitliche Rahmen bestimmt werden, innerhalb dem nach Erzeugen des Startsignales das Endsignal erzeugt werden muss. Die Vorschubgeschwindigkeit kann beispielhaft aus der Drehzahl der Antriebswelle, aber auch direkt aus einem Frequenzumrichter für den Vorschubantriebabgeleitet werden. Tritt somit innerhalb des Zeitfensters unter Berücksichtigung eines Toleranzbereiches wegen möglichem Schlupf das Endsignal nicht auf, dann wird das Freigabesignal von der Steuerung nicht erzeugt, weil das Werkstück offensichtlich innerhalb des Maschinenraumes hängengeblieben ist.

Vorteilhaft werden mit Erzeugen des Freigabesignales durch die Steuerung bestimmte Operationen der Bearbeitungsmaschine zugelassen. In den beschriebenen Fällen, wenn kein Endsignal rechtzeitig erzeugt wird, kann von der Steuerung eine entsprechende Meldung ausgegeben werden.

Zusätzlich kann die Steuerung auch ein akustisches und/oder optisches Signal erzeugen, um das Bedienpersonal darauf hinzuweisen, dass im Maschinenraum ein Werkstück hängengeblieben ist.

Bei einer vorteilhaften Ausführungsform werden die den theoretischen Vorschubweg des Werkstückes im Maschinenraum kennzeichnenden Signale mit Signalen eines Frequenzumrichters eines Vorschubmotors der Bearbeitungsmaschine in der Steuerung verglichen. Dieser Vergleich kann als Hinweis dafür dienen, dass die kennzeichnenden Signale störungsfrei ermittelt und übertragen werden.

Bei der erfindungsgemäßen Bearbeitungsmaschine ist in deren Eingangsbereich in den Maschinenraum ein erster Sensor angeordnet. Mit ihm wird das in Transportrichtung des Werkstückes rückwärtige Ende erfasst. Im Austrittsbereich des Maschinenraumes der Bearbeitungsmaschine ist ein zweiter Sensor vorgesehen, mit dem das in Transportrichtung rückwärtige Werkstückende nach Zurücklegen eines Vorschubweges des Werkstückes erfasst wird.

Vorteilhaft ist zur Erfassung des theoretischen Vorschubweges des Werkstückes die Bearbeitungsmaschine außerdem mit einem dritten Sensor versehen.

Die Vorschubelemente sind vorteilhaft Vorschubwalzen, die an Vorschubpendeln gelagert sind. Sie sind einarmige Hebel, die um eine Achse quer zur Transportrichtung der Werkstücke durch die Bearbeitungsmaschine schwenkbar gelagert sind.

Bevorzugt wird die Schwenkbewegung der Vorschubpendel einer eingangs- und einer ausgangsseitigen Vorschubwalze zur Erzeugung des Start- und des Endsignales herangezogen.

Zur Erfassung der Schwenkbewegung des Vorschubpendel der eingangs- und der ausgangsseitigen Vorschubwalze sind ist vorteilhaft jeweils ein Sensor vorgesehen.

Bei einer vorteilhaften Ausführungsform ist der Sensor, ein Reed-Schalter.

Bei einer weiteren vorteilhaften Ausführungsform ist der Sensor ein Endschalter.

Der Endschalter ist vorteilhaft maschinenfest angeordnet und wirkt mit einem Schaltelement zusammen. Es ist am Vorschubpendel der Vorschubwalze angeordnet und wirkt aufgrund der Schwenkbewegung des Vorschubpendels mit dem Endschalter zusammen.

Der dritte Sensor, mit dem der theoretische Vorschubweg des Werkstückes durch den Maschinenraum erfasst wird, ist bevorzugt ein induktiver Sensor. Zur Erfassung des Vorschubweges des Werkstückes kann auch ein Drehgeber eingesetzt werden. Der Drehgeber oder der induktive Sensor erfassen die Zahl der Umdrehungen einer entsprechenden Antriebswelle für die Transportelemente. Beispielhaft werden pro Umdrehung der Antriebswelle zwei Signale erzeugt. Eine vollständige Umdrehung der Antriebswelle entspricht einem bestimmten theoretischen Vorschubweg des Werkstückes. Somit kann aus der Zahl der Signale der theoretische Vorschubweg des Werkstückes abgeleitet werden.

Vorteilhaft wirkt der dritte Sensor mit einem auf einer Welle des Vorschubantriebes drehfest sitzenden Schaltring zusammen. Der Schaltring ist so ausgebildet, dass er pro Umdrehung ein, zwei oder mehr Schaltimpulse erzeugt. Jeder Impuls entspricht einem bestimmten theoretischen Vorschubweg des Werkstückes. Somit kann aus der Zahl der Impulse der entsprechende theoretische Vorschubweg des Werkstückes erfasst werden.

Wird das Werkstück in den Maschinenraum der Bearbeitungsmaschine transportiert, trifft es mit seinem in Transportrichtung vorderen Ende auf die jeweiligen Vorschubwalzen auf. Sie befinden sich zunächst in einer Grundstellung, aus der sie durch das vordere Werkstückende angehoben werden. Hierbei wird das die Vorschubwalzen jeweils tragende Vorschubpendel aufwärts geschwenkt.

Der erste Sensor im Bereich der einlaufseitigen Vorschubwalze wird beim Anheben dieser Vorschubwalze ausgeschaltet.

Sobald das Werkstück so weit transportiert ist, dass es die einlaufseitige Vorschubwalze verlässt, gelangt diese wieder in die Grundstellung, indem das zugehörige Vorschubpendel nach unten geschwenkt wird. Dies hat zur Folge, dass der erste Sensor eingeschaltet wird und somit das Startsignal erzeugt.

Mit dem Absenken der einlaufseitigen Vorschubwalze wird vorteilhaft die Überwachung mittels des dritten Sensors gestartet, der ab diesem Zeitpunkt den theoretischen Vorschubweg des Werkstückes erfasst.

Bei einer vorteilhaften Ausführungsform wird bei jedem Anheben der einlaufseitigen Vorschubwalze der erste Sensor ausgeschaltet und die Überwachung neu initialisiert bzw. die Erfassung zurückgesetzt.

Wenn das Werkstück in den Bereich der auslaufseitigen Vorschubwalze gelangt, wird diese aus der Grundstellung angehoben, wobei das zugehörige Vorschubpendel aufwärts schwenkt.

Kommt das rückwärtige Werkstückende von dieser auslaufseitigen Vorschubwalze frei, schwenkt das zugehörige Vorschubpendel der auslaufseitigen Vorschubwalze nach unten. Dadurch wird der zweite Sensor eingeschaltet, der dann das Endsignal an die Steuerung sendet.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in perspektivischer Darstellung eine erfindungsgemäße Bearbeitungsmaschine in Form einer Kehlmaschine,
- Fig. 2: eine Ansicht der Bearbeitungsmaschine gemäß Fig. 1,
- Fig. 3 bis 6: jeweils in vergrößerter Darstellung den Ablauf der Erfassung des Durchlaufes von Werkstücken durch die Bearbeitungsmaschine,
- Fig. 7: in vergrößerter Darstellung sowie im Schnitt eine Sensoranordnung, mit welcher die Umdrehung des Vorschubantriebes erfasst wird.

Die Bearbeitungsmaschine ist vorteilhaft eine Kehlmaschine, mit der längliche Werkstücke 1 aus Holz bei ihrem Durchlauf an vier Seiten bearbeitet werden können. Die Werkstücke 1 werden über einen Abrichttisch 2 zugeführt und in der Kehlmaschine auf einem Maschinentisch 3 während der Bearbeitung transportiert. Die Werkstücke 1 werden in der Kehlmaschine beim Durchlauf durch Werkzeuge bearbeitet. Im Einlaufbereich der Werkstücke 1 befindet sich hinter einer Einlaufklappe 4 eine untere Abrichtspindel 5, die um eine horizontale Achse drehbar ist. Mit dem auf der Abrichtspindel 5 sitzenden Werkzeug wird die Unterseite des Werkstückes 1 bearbeitet. In Transportrichtung 6 der Werkstücke 1 hinter der Abrichtspindel 5 ist die Kehlmaschine mit einer rechten Spindel 7 versehen, die um eine vertikale Achse drehbar ist. Mit dem auf der Spindel 7 sitzenden Werkzeug wird die in Transportrichtung 6 rechte Längsseite des Werkstückes 1 bearbeitet. Die Kehlmaschine ist mit einer linken Spindel 8 versehen, die um eine vertikale Achse drehbar ist und in Transportrichtung 6 der Werkstücke 1 hinter der rechten Spindel 7 angeordnet ist. Mit dem auf der Spindel 8 sitzenden Werkzeug wird die in Transportrichtung 6 linke Längsseite des Werkstückes 1 bearbeitet. In Transportrichtung 6 des Werkstückes 1 hinter der linken Spindel 8 hat die Kehlmaschine noch eine obere Spindel 9, die um eine horizontale Achse drehbar ist. Das auf dieser Spindel 9 sitzende Werkzeug kann die Oberseite des Werkstückes 1 bei seinem Durchlauf durch die Kehlmaschine bearbeiten. In Transportrichtung 6 hinter der oberen Spindel 9 hat die Kehlmaschine eine weitere untere Spindel 10, die um eine horizontale Achse drehbar ist. Das auf dieser Spindel 10 sitzende Werkzeug bearbeitet die Unterseite des Werkstückes 1 nochmals beim Durchlauf.

Der Maschinentisch 3 ist im Bereich der beiden unteren Spindeln 5, 10 in bekannter Weise unterbrochen, damit die auf den Spindeln sitzenden Werkzeuge die Unterseite des Werkstückes 1 bearbeiten können.

Währen des Durchlaufes durch die Kehlmaschine liegt das Werkstück 1 mit seiner in Transportrichtung 6 rechten Längsseite an Anschlägen 11 an.

Den beiden vertikalen Spindeln 7, 8 sind jeweils zu deren Flugkreis quer zur Transportrichtung 6 verschiebbare Tischplatten 12, 13 zugeordnet.

Zum Transport des Werkstückes 1 durch die Kehlmaschine sind Vorschubwalzen 14 bis 18 vorgesehen, die auf der Oberseite des Werkstückes 1 aufliegen und es in Transportrichtung 6 durch die Kehlmaschine transportieren. Die Vorschubwalzen 14 bis 18 sind jeweils an Vorschubpendeln 19 gelagert, die schwenkbar an Pendelhaltern 20 gelagert sind. Sie sind an einem Transportbalken 21 befestigt, der sich in Transportrichtung 6 mit Abstand oberhalb des Maschinentisches 3 erstreckt. Die Pendelhalter 20 sind lösbar am Transportbalken 21 befestigt.

Mit Hilfe von Druckzylindern 22, vorzugsweise Pneumatikzylindern, werden die Vorschubwalzen 14 bis 18 gegen die Oberseite des Werkstückes 1 gedrückt. Die Druckzylinder 22 sind an den Pendelhaltern 20 gelagert und greifen an den Vorschubpendeln 19 an.

Die Vorschubpendel 19 sind einarmige Hebel, deren eines Ende auf einer horizontalen Achse 23 schwenkbar gelagert ist. Die Druckzylinder 22 bilden sogenannte Pneumatikandrücke und greifen an den freien Enden der Vorschubpendel 19 an.

Zum Antrieb der Transportwalzen dient ein Vorschubmotor 24, der Vorschubwellen 26 antreibt, die über Kupplungen 27 miteinander antriebsverbunden sind und die wiederum Vorschubgetriebe 25 antreiben. Die Transportwalzen 14 bis 18 sind über Kardanwellen 28 mit den Abtrieben der Vorschubgetriebe 25 antriebsverbunden.

Am Druckzylinder 22 der Vorschubwalze 15 ist ein Sensor 29 vorgesehen, der im Ausführungsbeispiel ein Reed-Schalter ist. Mit ihm wird erkannt, ob die Transportwalze 15 auf dem zu transportierenden Werkstück 1 aufliegt oder nicht, weil die Transportwalze im ersten Fall angehoben und im zweiten Fall abgesenkt in der Grundstellung ist.

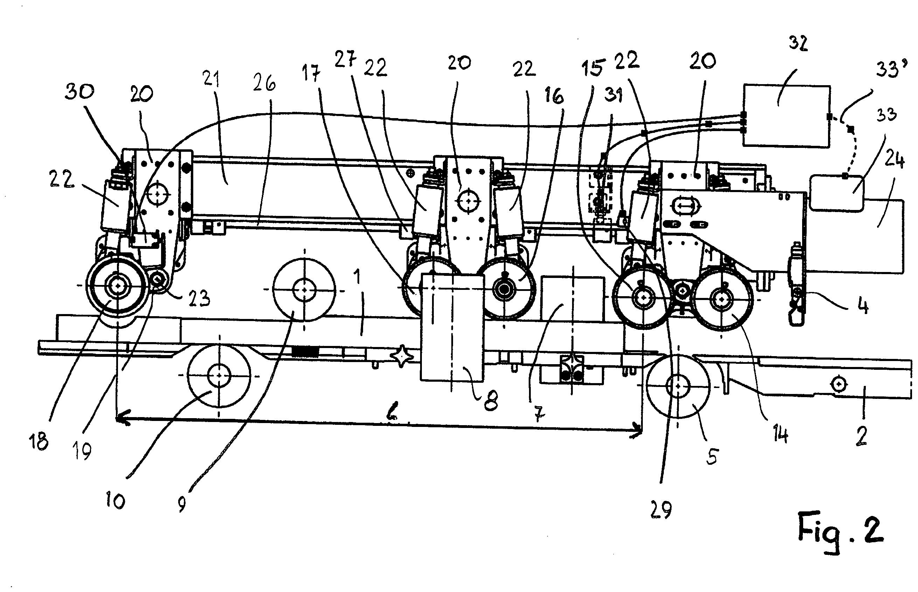

Der Transportwalze 18, die sich in Transportrichtung 6 hinter der Spindel 10 befindet, ist ein weiterer Sensor 30 zugeordnet, mit dem ebenfalls erfasst werden kann, ob die Transportwalze 18 abgesenkt oder angehoben ist. Über einen weiteren Sensor 31 wird die Umdrehung der Vorschubwellen 26 erfasst, woraus die Vorschubgeschwindigkeit, und der theoretische Vorschubweg des Werkstückes 1 in der Kehlmaschine ermittelt wird. Alle drei Sensoren 29 bis 31 sind an eine Steuerung 32 erfindungsgemäß angeschlossen. Der Vorschubmotor 24 wird mit einem nicht dargestellten Frequenzumrichter angetrieben, wodurch die Vorschubgeschwindigkeit eingestellt wird. Der Frequenzumrichter ist an den Klemmenkasten 33 des Vorschubmotors 24 und an die Steuerung 32 angeschlossen. Diese Verbindung ist in Fig. 2 symbolisch mit der gestrichelten Linie 33' dargestellt. Mit dem Frequenzumrichter wird die aktuelle Vorschubgeschwindigkeit des Vorschubmotors 24 vorgegeben und an die Steuerung übermittelt. Der Sensor 32 sendet Schaltimpulse an die Steuerung 32. aus welchen ebenfalls die Vorschubgeschwindigkeit ermittelt wird. Diese wird in der Steuerung 32 mit der vom Frequenzumrichter 33 ausgelesenen Vorschubgeschwindigkeit verglichen. Damit wird überprüft, ob der Sensor 31 einwandfrei arbeitet und funktioniert, was z.B. nicht der Fall wäre, wenn er defekt oder falsch eingestellt ist. Gegebenenfalls gibt die Steuerung 32 eine Fehlermeldung aus.

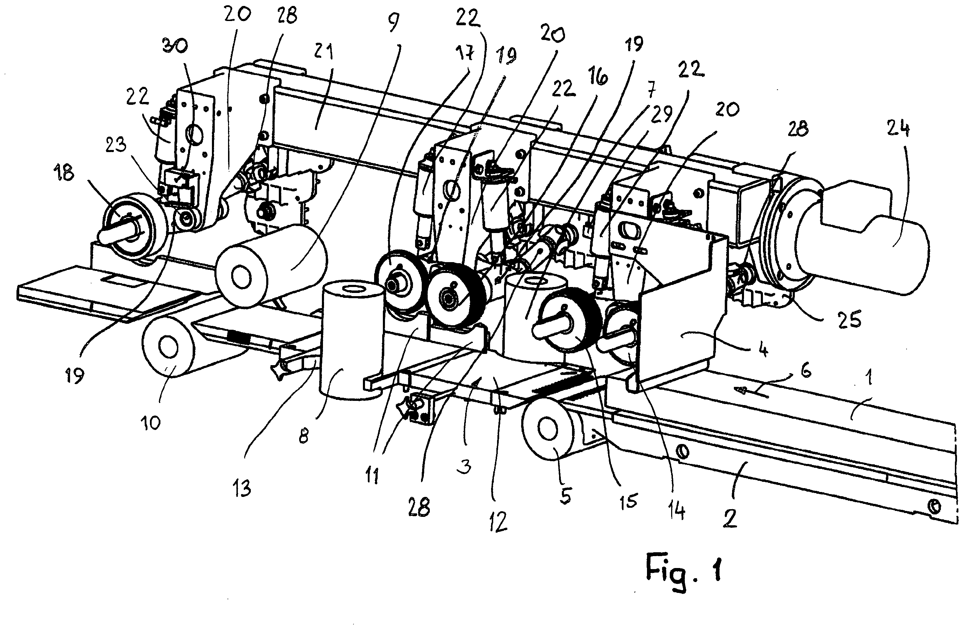

In der Darstellung gemäß Fig. 1 läuft das Werkstück 1 gerade in die Kehlmaschine ein. Das in Transportrichtung 6 vordere Ende des Werkstückes 1 ist unter der Einlaufklappe 4 hindurch bereits in die Kehlmaschine eingetreten. Sobald das Werkstück 1 in den Bereich der Vorschubwalzen 14 bis 18 gelangt, wird es von diesen Vorschubwalzen durch die Kehlmaschine transportiert. Hierbei werden die Vorschubwalzen mittels der Druckzylinder 22 mit ausreichendem Druck gegen die Oberseite des Werkstückes 1 gedrückt. Beim Durchlauf durch die Kehlmaschine wird das Werkstück mit den auf den Spindeln 7 bis 10 sitzenden Werkzeugen bearbeitet. Fig. 2 zeigt, dass mit dem auf der Spindel 9 sitzenden Werkzeug Material an der Oberseite des Werkstückes 1 abgetragen wird.

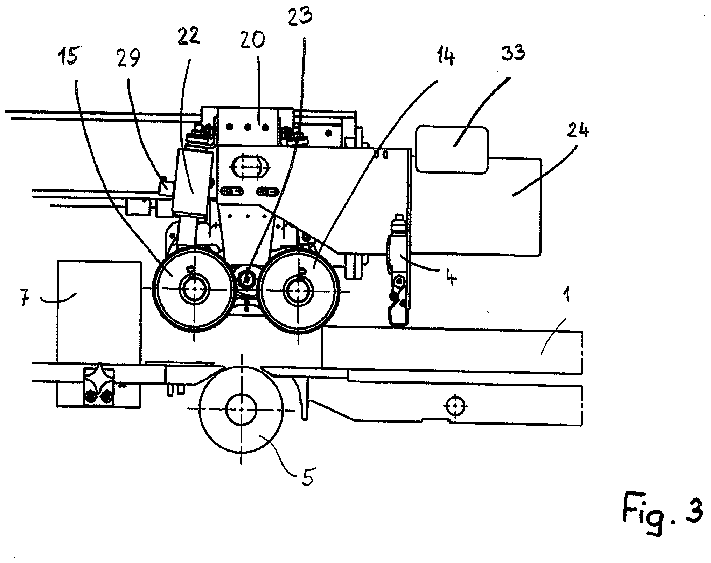

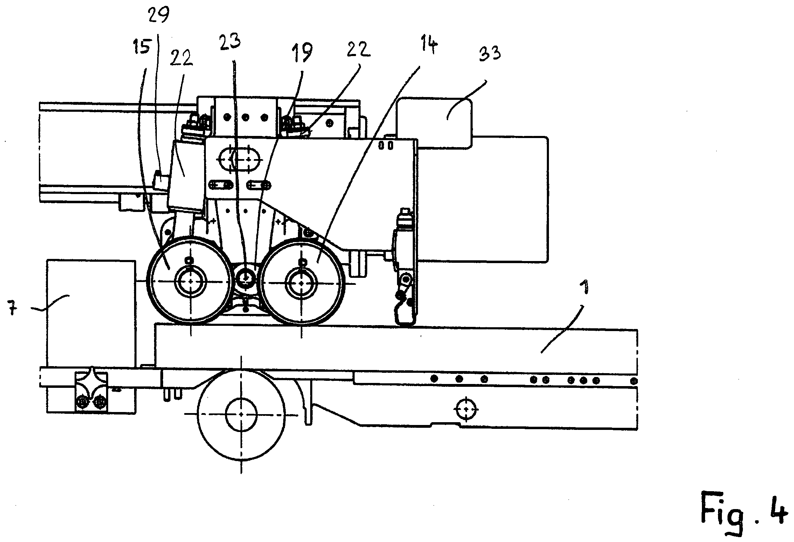

Solange das Werkstück 1 noch nicht in die Kehlmaschine eingelaufen ist, nehmen die Vorschubwalzen 14 bis 18 eine untere Lage ein. In Fig. 3 befinden sich die beiden Vorschubwalzen 14, 15 in dieser abgesenkten Grundstellung. Der Sensor 29 ist in der Grundstellung geschaltet. Der Sensor 29 ist der in Einlaufrichtung zweiten Vorschubwalze 15 zugeordnet, weil die erste Vorschubwalze 14 bei Bedarf hochgestellt sein kann, wenn beispielsweise ein genaues Abrichten des Werkstückes 1 erforderlich ist. Wenn das in Transportrichtung 6 vordere Ende des Werkstückes 1 auf die Vorschubwalzen 14, 15 aufläuft, werden sie angehoben, indem die Vorschubpendel 19 um die gemeinsame Achse 23 aufwärts geschwenkt werden. Diese Stellung der Vorschubwalzen 14, 15 zeigt Fig. 4. Das Werkstück 1 ist so weit in die Kehlmaschine eingefahren, dass es sich unter beiden Vorschubwalzen 14, 15 befindet. Die zugehörigen Vorschubpendel 19 sind um die gemeinsame Achse 23 aufwärts geschwenkt. Die Druckzylinder 22 drücken die Vorschubwalzen 14, 15 über die Vorschubpendel 19 gegen die Oberseite des Werkstückes 1. Durch das aufwärts schwenken des Vorschubpendels 19 der Vorschubwalze 15 wird eine Kolbenstange des Druckzylinders 22 eingeschoben. Der Reed-Sensor 29 wird durch einen Magnetkolben der Kolbenstange geschaltet, wenn das Vorschubpendel 19 in der Grundstellung ist. Wenn der Magnetkolben beim Einschieben der Kolbenstange aus dem Erfassungsbereich des Sensors 29 kommt, wird der Sensor 29 ausgeschaltet.

Sobald das in Transportrichtung 6 rückwärtige Ende des Werkstückes 1 unter der Vorschubwalze 15 hindurch gelaufen ist, schwenkt das Vorschubpendel 19 dieser Vorschubwalze 15 durch Ausfahren der Kolbenstange des Druckzylinders 22 wieder zurück in die Grundstellung. Der Sensor 29 wird nunmehr über den Magnetkolben wieder eingeschaltet.

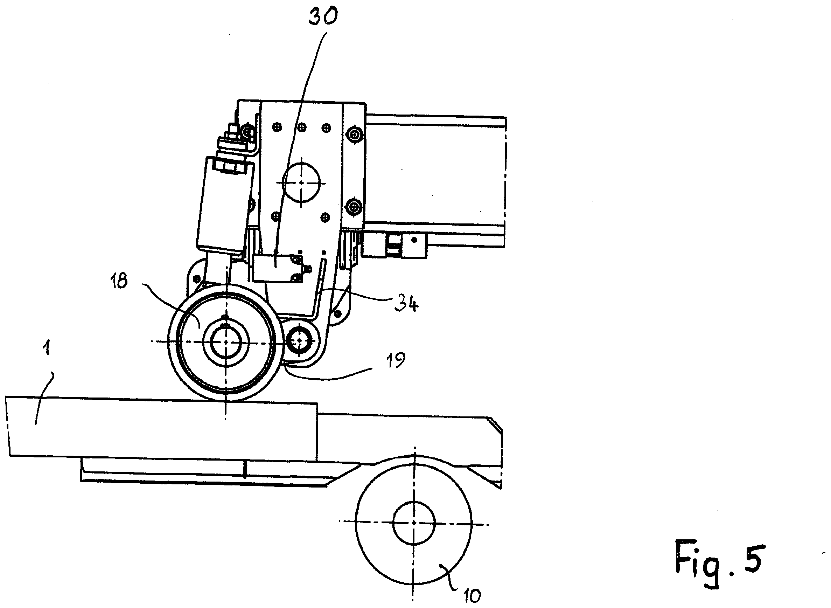

In Fig. 5 ist die Situation dargestellt, dass sich das Werkstück 1 noch unter der letzten Vorschubwalze 18 befindet, die dementsprechend über das Vorschubpendel 19 angehoben ist. Der Sensor 30 ist als Endschalter ausgebildet, der mit einem Schaltelement 34 zusammenwirkt. Es ist winkelförmig ausgebildet und am Vorschubpendel 19 befestigt. Solange sich die Vorschubwalze 18 in der angehobenen Stellung befindet, hat das Schaltelement 34 Abstand vom Sensor 30, so dass er nicht geschaltet ist.

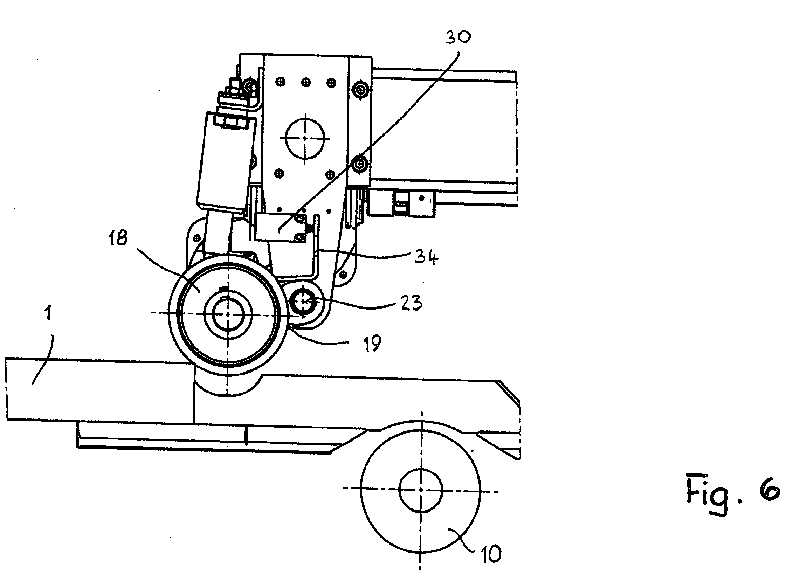

Beim weiteren Transport kommt das Werkstück 1 von der Vorschubwalze 18 frei (Fig. 6). Das Vorschubpendel 19 kann dann um die Achse 23 nach unten in die Grundstellung schwenken (entgegen Uhrzeigersinn). Mit ihm schwenkt das Schaltelement 34 um die Achse 23, wodurch es in Kontakt mit dem Sensor 30 kommt, ihn betätigt und damit wieder schaltet. Der Sensor 30 sendet ein entsprechendes Signal an die Steuerung 32, welches den Überwachungsendzeitpunkt vorgibt.

Für die Überwachung ist also immer das Werkstückende maßgeblich, d.h wenn das Werkstück die Einlaufvorschubwalze 15 und die Auslaufvorschubwalze 18 verlässt.

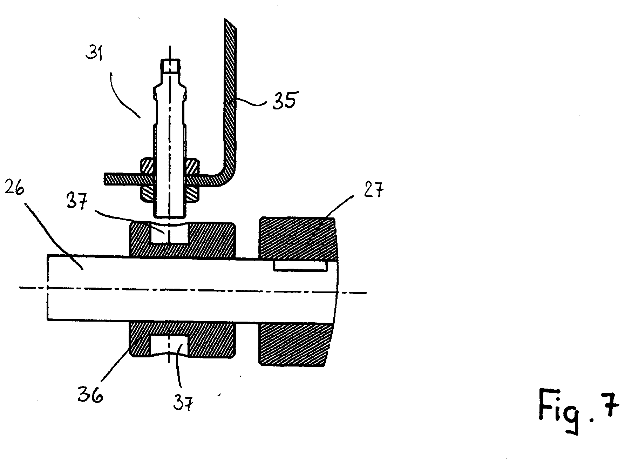

Fig. 7 zeigt die Ausbildung des Sensors 31, mit dem über die Umdrehung der Vorschubwellen 26 der theoretische Vorschubweg des Werkstückes 1 erfasst wird. Der tatsächliche Vorschubweg des Werkstückes 1 kann davon abweichen, da die Vorschubwalzen beispielsweise Schlupf haben können. Der Sensor 31 ist ein induktiver Sensor oder ein induktiver Schalter, der an einem Sensorhalter 35 befestigt ist. Er ist am Transportbalken 31 befestigt.

Der Sensor 31 liegt einem Schaltring 36 gegenüber, der drehfest auf der Vorschubwelle 26 sitzt, die sich zwischen Vorschubgetrieben erstreckt. Die Verbindung der Vorschubwellen 26 erfolgt über die schematisch dargestellte Kupplung 27.

Der Schaltring 36 weist an seinem Umfang zwei diametral einander gegenüberliegende Vertiefungen 37 auf, die bei einer 360°-Drehung des Schaltringes 36 zu zwei Schaltimpulsen führen. Der Sensor 31 sendet also pro Umdrehung zwei Schaltimpulse an die Steuerung 32. Die Vorschubwelle 26 hat eine Drehzahl, die der Motordrehzahl entspricht.

Die Anzahl der Umdrehungen des Schaltringes 36 entspricht der Anzahl der Umdrehungen des Vorschubmotors 24. Über die Getriebeübersetzung der Vorschubgetriebe 25 ergibt sich die Anzahl der Umdrehungen der Vorschubwalzen 14 bis 18. Zusammen mit dem Durchmesser und damit Umfang der Vorschubwalzen 14 bis 18 lässt sich der theoretische Vorschubweg des Werkstückes 1 durch die Kehlmaschine bestimmen.

Jeder Schaltimpuls entspricht einem über die Getriebeübersetzung und den Umfang der Vorschubwalzen berechneten theoretischen Vorschubweg.

Die dem Sensor 29 zugeordnete Vorschubwalze 15 und die am Austritt der Kehlmaschine befindliche, dem Sensor 30 zugeordnete Vorschubwalze 18 haben den konstruktiv vorgegebenen festen Abstand I (Fig. 2) voneinander. Durch die Werkstückpositionen, an denen das Start- und das Endsignal erzeugt werden, ergibt sich der konstruktiv vorgegebene Vorscgubweg, den das Ende jedes Werkstückes beim Durchlauf durch die Maschine vom Verlassen der Einlaufvorschubwalze bis zum Verlassen der Auslaufvorschubwalze zurücklegen muss. Wenn das Werkstück ordnungsgemäß und ohne Störung durchläuft, ergeben sich für das Zurücklegen dieses Vorschubweges eine bestimmte Umdrehungsanzahl der Vorschubwalzen, der Vorschubwellen und Impulszahl des Sensors 31.

Die Steuerung 32 wertet die Signale der Sensoren 29 und 30 aus. Sobald die Vorschubwalze 15 durch das Werkstück angehoben wird, wird der Sensor 29 ausgeschaltet. Durch dieses Ausschaltsignal wird die noch zu beschreibende Überwachung neu initialisiert, jedes Mal, wenn die Vorschubwalze 15 durch ein neues Werkstück, das in die Bearbeitungsmaschine eingeführt wird, aufwärts geschwenkt wird.

Sobald das in Transportrichtung 6 rückwärtige Ende des Werkstückes 1 die Vorschubwalze 15 verlassen hat, schwenkt sie in die Grundstellung zurück, wodurch der Sensor 29 geschaltet wird. Dadurch erhält die Steuerung 32 vom Sensor 29 ein Startsignal als Beginn des Überwachungsvorganges.

Die Steuerung 32 beginnt nun die Impulse des Sensors 31 zu zählen bzw. für jeden Impuls den berechneten und in der Steuerung hinterlegten theoretischen Vorschubweg pro Impuls aufzuaddieren. Immer wenn der Sensor 29 beim Einführen eines neuen Werkstückes den Ausschaltimpuls an die Steuerung sendet, wird die Überwachung neu initialisiert und der Zähler auf Null gesetzt. Anstelle des Ausschaltimpulses beim Einlaufen des Werkstückes kann auch das Startsignal beim Verlassen des Werkstückes den Zähler zunächst auf Null setzen. Zu jedem Zeitpunkt, wenn ein Werkstück 1 mit seinem rückwärtigen Ende die Vorschubwalze 18 verlassen hat, wenn also die Vorschubwalze 18 wieder in die Grundstellung abgesenkt und der Sensor 30 geschaltet wird, wird von der Steuerung überprüft, ob der über die Impulse des Sensors aufaddierte Wert für den theoretischen Vorschubweg dem konstruktiv vorgegebenen Vorschubweg entspricht. Wenn die Werkstücke störungsfrei durch die Maschine transportiert werden, entspricht der tatsächlich zurückgelegte Vorschubweg dem theoretischen Vorschubweg innerhalb einer gewissen Toleranz. Diese kann sich dadurch ergeben, dass der tatsächliche effektive Umfang bzw. Durchmesser der Vorschubwalzen von dem theoretischen und in der Berechnung berücksichtigten Umfang bzw. Durchmesser abweicht und die Vorschubwalzen einen geringen Schlupf haben können. In der Praxis kann nicht überwacht werden, ob der Wert exakt dem konstruktiv vorgegebenen Vorschubwert entspricht, sondern es müssen Grenzwerte definiert werden. Ferner ist zu berücksichtigen, dass auch das Schalten der Sensoren 29, 30 beim Verlassen des Werkstückes und das Verlassen der Vorschubwalzen selbst toleranzbehaftet ist. Die Steuerung 32 addiert wie beschrieben ab Startsignal pro Impuls den bestimmten theoretischen Vorschubweg auf. Die Steuerung überwacht nun, ob in dem hinterlegten Wegfenster (Grenzwerte), d.h. der vorgegebenen Wegtoleranz das Endsignal gegeben wird. Nur dann wird ein Freigabesignal gesetzt, welches bei jeder Neuinitialisierung durch ein neu zugeführtes Werkstück wieder weggenommen wird. Wird innerhalb der Wegtoleranz kein Endsignal gegeben, wird kein Freigabesignal gesetzt.

Dies kann der Fall sein, wenn das Werkstück nicht störungsfrei durch die Maschine gelaufen ist, kurzzeitig oder ganz hängen geblieben ist. Dann erfolgt das Endsignal vom Sensor 30 erst, nachdem die Wegtoleranz, d.h. der aufaddierte Weg, bereits überschritten ist, oder es erfolgt gar kein Signal.

Bleibt das letzte Werkstück in der Maschine liegen, kann auch als letztes Endsignal das Signal von Sensor 30 erfolgen, welches von dem vorletzten Werkstück beim Verlassen der auslaufseitigen Vorschubwalze 18 mit dessen rückwärtigem Ende gegeben wurde. Dies ist jedoch zu einem Zeitpunkt, zu dem der von der Steuerung aufaddierte Vorschubweg die untere Toleranzgrenze (Weg I - Toleranz) noch nicht erreicht hat.

In einer alternativen Überwachungsauswertung überprüft die Steuerung, ob der mit Sensor 31 innerhalb des zeitlichen Abstands der von den Sensoren 29, 30 gelieferten Signale ermittelte theoretische Vorschubweg innerhalb des vorgegebenen Wegfensters, d.h. innerhalb der Wegtoleranz, liegt, welche sich aus dem konstruktiv vorgegebenen Weg I und einer vorgegebenen Toleranz ergibt. D. h. hier erfolgt die Auswertung zum Zeitpunkt der Erzeugung des Endsignals, wohingegen bei der vorher geschilderten Auswertung überwacht wird, ob innerhalb des vorgegebenen Wegfensters ein Endsignal erzeugt wird.

Bei einer weiteren Überwachungsauswertung wird als Freigabekriterium nur herangezogen, dass der ab Startzeitpunkt erfasste theoretische Vorschubweg zum Zeitpunkt des Endsignals einen vorgegebenen Grenzwert überschritten hat, bzw. dass das Endsignal erst kommt, wenn der erfasste theoretische Vorschubweg den Grenzwert erreicht hat. Der Grenzwert wird aus dem konstruktiv vorgegebenen Vorschubweg I unter Berücksichtigung einer notwendigen Toleranz bestimmt.

Auch mit dieser Überwachung wird zuverlässig festgestellt, ob sich noch ein Werkstück in der Maschine befindet. Es kann der Fall sein, dass ab dem Startsignal überhaupt kein Endsignal mehr kommt, weil das Werkstück in der Maschine hängengeblieben ist. Es kann jedoch auch sein, dass das letzte Werkstück, welches das Startsignal ausgelöst hat, in der Maschine hängen bleibt und das Endsignal vom vorhergehenden Werkstück erzeugt wird, Dieses Endsignal kommt dann zu einem Zeitpunkt, zu dem der Grenzwert noch nicht erreicht ist, da dieses Werkstück nicht mehr den gesamten Vorschubweg ab Startsignal zurücklegen muss. Dieser Fall kann eintreten, wenn die Werkstücke aneinander anliegend Stoß an Stoß in die Maschine geführt werden, oder wenn das letzte Werkstück kurz ist im Vergleich zu dem Vorschubweg und das vorherige die Auslaufvorschubwalze noch nicht verlassen hat, wenn das letzte Werkstück die Einlaufvorschubwalze verlässt und dabei das Startsignal erzeugt.

Bleibt das letzte Werkstück kurz hängen oder wird mit sehr großem Schlupf gefördert, kommt das Endsignal zwar erst zu einem sehr späten Zeitpunkt, d.h. bei einem erfassten theoretischen Vorschubweg, der weit über dem Grenzwert liegen kann, es ist aber dennoch aus der Maschine gelaufen und es ist sichergestellt und auch mit dieser Überwachung erkannt worden, dass sich kein Werkstück mehr in der Maschine befindet.

Vorzugsweise wird bei der Überwachung aber auch ein oberer Grenzwert herangezogen, d.h. das Endsignal muss wie beschrieben innerhalb eines Wegfensters, welches durch den oberen und unteren Grenzwert festgelegt ist, erzeugt werden, damit die Freigabe kommt. Hierbei wird also ein Freigabesignal nur erzeugt, wenn das Werkstück ordnungsgemäß durch die Maschine gelaufen und nicht auch nur kurzzeitig hängengeblieben ist. Der untere Grenzwert entspricht dabei dem einen Grenzwert bei der oben geschilderten Überwachung.

Je nachdem, ob ein Freigabesignal da ist oder nicht, kann die Steuerung entsprechende Meldungen ausgeben und bestimmte Maschinenoperationen zulassen oder nicht. Insbesondere wird eine Positionierung der Spindeln 5, 7 bis 10 nur dann zugelassen, wenn die Maschine leer ist, so dass es zu keiner Kollision mit einem noch in der Maschine befindlichen Werkstück kommen kann. Aus Sicherheitsgründen ist eine Verstellung des Transportbalkens 21 nach oben verboten, wenn noch Spindeln 5, 7 bis 10 laufen und sich Werkstücke in der Maschine befinden könnten, da diese beim Hochfahren des Transportbalkens 21 von den Vorschubwalzen frei kommen, dadurch nicht mehr gehalten werden und daher von dem Eingriff der laufenden Werkzeuge zurückgeschlagen werden könnten. Auch hierzu kann das Freigabesignal herangezogen und diese Verstellung zugelassen werden, da erkannt wird, ob die Maschine leer ist. Bei Bedarf kann zusätzlich ein nicht dargestelltes Einlauftor geschlossen werden, wenn eine solche Verstellung vorgenommen werden soll.

Über den Sensor 29 könnte auch generell ein solches nicht dargestelltes Einlauftor gesteuert werden, das immer geschlossen wird, wenn das Werkstückende des durchlaufenden Werkstückes den Sensor 29 verlassen hat und kein neues Werkstück eingeführt wird. Das Öffnen dieses Einlauftors, damit Werkstücke zugeführt werden können, kann beispielsweise über einen weiteren nicht dargestellten Sensor am Einlauf der Kehlmaschine initiiert werden.

Beispielsweise kann die Steuerung 32 auch ein optisches und/oder ein akustisches Signal erzeugen, das dem Bedienpersonal mitteilt, dass in der Kehlmaschine ein Werkstück 1 hängengeblieben ist oder dass die Kehlmaschine leer ist.

Da bei der Kehlmaschine stets das rückwärtige Ende des Werkstückes 1 zum Auslösen der Sensoren 29, 30 herangezogen wird, ist die Länge der Werkstücke 1, die durch die Kehlmaschine transportiert werden, nicht maßgeblich. Es können auch mehrere Werkstücke aneinanderliegend Stoß an Stoß in die Kehlmaschine transportiert werden. Hierbei ist das in Transportrichtung 6 rückwärtige Ende des letzten Werkstückes sowohl beim Verlassen der einlaufseitigen Vorschubwalze 15 als auch der auslaufseitigen Vorschubwalze 18 für die Überwachung entscheidend.

Im Ausführungsbeispiel werden die Sensoren 29 und 30 jeweils in der Grundstellung der Vorschubwalzen 15, 18 betätigt und eingeschaltet. Es ist jeweils auch möglich, dass die Sensoren bei der Betätigung ausgeschaltet werden und dass die Sensoren in der Grundstellung nicht betätigt sind. Als Sensoren können wahlweise für beide Vorschubwalzen Reed-Sensoren oder End- bzw. Positionsschalter eingesetzt werden. Ebenso ist es möglich, das Werkstück 1 mittels Lichtschranken oder anderer geeigneter Sensoren zu erfassen.

Zur Ermittlung des theoretischen Vorschubwegs kann der Schaltring 36 auf den Vorschubwellen 26 auch mehr Vertiefungen 37 aufweisen, wodurch die Auflösung höher ist, also sich pro Impuls ein kürzerer Vorschubweg ergibt, was in der Praxis jedoch nicht erforderlich ist.

Der theoretische Vorschubweg bzw. ein ihn kennzeichnenden Wert kann auch über andere Sensoren 31, wie z. B. einen Drehgeber, oder an einem anderen Ort, z.B. an den Vorschubwalzen selbst, erfasst werden. Es ist ebenso möglich, diesen Wert direkt aus dem Frequenzumrichter abzuleiten.

Als kennzeichnenden Wert für den theoretischen Vorschubweg kann beispielsweise auch die Impulsanzahl des Sensors 31 dienen. Über den Umfang der Vorschubwalzen, die Getriebeübersetzung und die Impulsanzahl pro Umdrehung kann die Anzahl der Impulse ermittelt werden, die das Werkstück theoretisch braucht, um den Vorschubweg I zurückzulegen, so dass diese Impulsanzahl als vorgegebener Vergleichswert dient. Auch hier ist eine bestimmte Impulsanzahl als Toleranz bei der Überwachung zu berücksichtigen.

Bei der Überwachung über die Zeit kann aus dem Frequenzumrichter oder dem Sensor 31 die gerade eingestellte Vorschubgeschwindigkeit ermittelt werden und daraus die Zeit, die das Werkstück zum Durchlaufen des Vorschubweges I brauchen dürfte. Nunmehr kann direkt die tatsächliche Zeit zwischen den Schaltimpulsen der Sensoren 29, 30 mit der theoretisch notwendigen Zeit verglichen werden, die innerhalb einer vorgegeben Toleranz liegen müssen, wenn die Werkstücke ordnungsgemäß durch die Maschine gelaufen sind. Ebenso kann hierbei überwacht werden, ob ab Startsignal von Sensor 29 ein Endsignal von Sensor 30 innerhalb eines vorgeben Zeitfensters gesendet wird.

Allgemein ausgedrückt basiert die Überwachung darauf, dass die Steuerung 32 ein den konstruktiv vorgegebenen Vorschubweg I charakterisierendes Merkmal mit einem ab dem Startsignal erfassten Merkmal, welches den theoretischen Vorschubweg des Werkstückes charakterisiert, zum Zeitpunkt des Endsignals vergleicht und ein Freigabesignal setzt, wenn die Werte innerhalb einer vorgegebenen Toleranz liegen oder alternativ überwacht, ob das Endsignal von Sensor 30 zu einem Zeitpunkt kommt, zu dem das erfasste Merkmal innerhalb vorgegebenen Toleranzgrenzen oder zumindest über einem vorgegebenen Grenzwert liegt, und dann das Freigabesignal setzt.

## Patentansprüche

1. Verfahren zum Überwachen des Maschinenraums einer Bearbeitungsmaschine auf im Maschinenraum hängengebliebene Werkstücke (1), **dadurch gekennzeichnet, dass** beim Durchlauf des Werkstückes (1) durch den Maschinenraum das in Transportrichtung (6) rückwärtige Ende des Werkstückes (1) im Einlaufbereich des Maschinenraumes ein Startsignal und im Auslaufbereich ein Endsignal mittels an eine Steuerung (32) angeschlossener Sensoren (29, 30) erzeugt, und dass die Steuerung (32) ab dem Startsignal ein einen theoretischen Vorschubweg charakterisierendes Merkmal erfasst und ein einen von Werkstücken (1) freien Maschinenraum kennzeichnendes Freigabesignal erzeugt, wenn zum Zeitpunkt der Erzeugung des Endsignales der Wert des erfassten charakteristischen Merkmales einen vorgegebenen Grenzwert erreicht hat und vorzugsweise einen vorgegebenen oberen Grenzwert noch nicht überschritten hat, oder wenn das Endsignal zu einem Zeitpunkt erzeugt wird, zu dem der Wert des erfassten charakteristischen Merkmals den vorgegebenen Grenzwert erreicht hat und vorzugsweise den oberen Grenzwert noch nicht überschritten hat, wobei die Grenzwerte auf dem Abstand zwischen dem ersten Sensor (29) und dem zweiten Sensor (30) basieren.

2. Verfahren nach Anspruch 1,
**dadurch gekennzeichnet, dass** die Erfassung des theoretischen Vorschubweges des Werkstückes (1) von der Drehung einer Abtriebswelle (26) für ein Transportelement (14 bis 18) abgeleitet wird.

3. Verfahren nach Anspruch 1 oder 2,
**dadurch gekennzeichnet, dass** das den Vorschubweg charakterisierende Merkmal die Zeitdifferenz zwischen den Signalen unter Berücksichtigung einer vorgegebenen Vorschubgeschwindigkeit ist.

4. Verfahren nach Anspruch 3,
**dadurch gekennzeichnet, dass** die Steuerung (32) das Freigabesignal erzeugt, wenn innerhalb der eine vorgegebene Toleranz berücksichtigenden Zeitdifferenz, zumindest nach einer vorgegebenen Zeit das Endsignal erzeugt wird.

5. Verfahren nach einem der Ansprüche 1 bis 4,
**dadurch gekennzeichnet, dass** mit dem Freigabesignal eine Positionierung von Spindeln (5, 7 bis 10) der Werkzeuge oder eine Verstellung der Transportelemente bei laufenden Spindeln (5, 7 bis 10) zugelassen werden.

6. Verfahren nach einem der Ansprüche 1 bis 5,
**dadurch gekennzeichnet, dass** die den Vorschubweg des Werkstückes (1) kennzeichnenden Signale mit Signalen eines Frequenzumrichters eines Vorschubmotors (24) der Bearbeitungsmaschine in der Steuerung (32) verglichen werden.

7. Verfahren nach einem der Ansprüche 1 bis 6,
**dadurch gekennzeichnet, dass** das Werkstück (1) mit seinem in Transportrichtung (6) vorderen Ende die Vorschubwalzen (14 bis 18) anhebt, wobei das zugehörige Vorschubpendel (19) aufwärts schwenkt, und dass mit dem Aufwärtsschwenken der Vorschubpendel der Sensor (29, 30) ausgeschaltet wird.

8. Verfahren nach Anspruch 7,
**dadurch gekennzeichnet, dass** bei Verlassen der Vorschubwalze (15) das zugehörige Vorschubpendel (19) nach unten schwenkt und dadurch der Sensor (29, 30) eingeschaltet wird, und dass mit dem Absenken der einlaufseitigen Vorschubwalze (15) die Überwachung mittels eines dritten Sensors (31) gestartet wird.

9. Verfahren nach Anspruch 8,
**dadurch gekennzeichnet, dass** bei jedem Anheben der einlaufseitigen Vorschubwalze (15) der erste Sensor (29) ausgeschaltet und die Überwachung neu initialisiert wird.

10. Bearbeitungsmaschine zur Durchführung des Verfahrens nach einem der Ansprüche 1 bis 9, mit Vorschubelementen (14 bis 18), mit denen das Werkstück (1) durch einen Maschinenraum der Bearbeitungsmaschine transportierbar ist,
**dadurch gekennzeichnet, dass** im Einlaufbereich der Bearbeitungsmaschine ein erster Sensor (29) angeordnet ist, mit dem das in Transportrichtung (6) rückwärtige Ende des Werkstückes (1) erfasst wird, dass im Auslaufbereich der Bearbeitungsmaschine ein zweiter Sensor (30) angeordnet ist, mit dem das in Transportrichtung (6) rückwärtige Ende des Werkstückes (1) nach Zurücklegen eines durch den Abstand der beiden Sensoren (29, 30) bestimmten Vorschubweges des Werkstückes (1) erfasst wird, dass ein dritter Sensor (31) zur Erfassung des theoretischen Vorschubweges des Werkstückes (1) durch die Bearbeitungsmaschine vorgesehen ist, und dass die Sensoren (29 bis 31) an eine Steuerung (32) angeschlossen sind, die die von den Sensoren (29 bis 31) übertragenen Sensorsignale auswertet und ein Freigabesignal erzeugt, wenn der Maschinenraum frei von Werkstücken (1) ist.

11. Bearbeitungsmaschine nach Anspruch 10,
**dadurch gekennzeichnet, dass** die Vorschubelemente (14 bis 18) Vorschubwalzen sind, die an Vorschubpendeln (19) gelagert sind.

12. Bearbeitungsmaschine nach Anspruch 11,
**dadurch gekennzeichnet, dass** die Schwenkbewegung der Vorschubpendel (19) einer eingangs- und einer ausgangsseitigen Vorschubwalze (15, 18) zur Erzeugung des Start- und des Endsignals herangezogen wird.

13. Bearbeitungsmaschine nach Anspruch 12,
**dadurch gekennzeichnet, dass** der erste und der zweite Sensor (29, 30), der vorteilhaft ein Reed-Schalter ist, die Schwenkbewegung des Vorschubpendels (19) erfassen.

14. Bearbeitungsmaschine nach einem der Ansprüche 10 bis 13,
**dadurch gekennzeichnet, dass** der Sensor (29, 30) ein Endschalter ist, der vorteilhaft maschinenfest angeordnet ist, und dass das Vorschubpendel (19) ein Schaltelement (34) trägt, das mit dem Endschalter (30) zusammenwirkt.

15. Bearbeitungsmaschine nach einem der Ansprüche 10 bis 14,
**dadurch gekennzeichnet, dass** der dritte Sensor (31) ein induktiver Sensor oder ein Drehgeber ist, der vorzugsweise mit einem auf einer Welle (26) des Vorschubantriebes drehfest sitzenden Schaltring (36) zusammenwirkt.

## Claims

1. A method for monitoring the machinery space of a processing machine for workpieces (1) that have got stuck in the machinery space, **characterized in that** during passage of the workpiece (1) through the machinery space the rear end of the workpiece (1) in the transport direction (6) generates a start signal in the inlet region of the machinery space and an end signal in the outlet region by means of sensors (29, 30) that are connected to a control unit (32), and **in that** the control unit (32) detects beginning with the start signal a feature characterizing a theoretical feed travel and generates a release signal characterizing a machinery space free from workpieces (1) if at the time of generating the end signal the value of the detected characteristic feature has reached a predefined limiting value and preferably has not yet exceeded a predefined upper limiting value or if the end signal is generated at a time, at which the value of the detected characteristic feature has reached the predefined limiting value and preferably has not yet exceeded the upper limiting value, wherein the limiting values are based on the distance between the first sensor (29) and the second sensor (30).

2. The method according to Claim 1, **characterized in that** the detection of the theoretical feed travel of the workpiece (1) is derived from the rotation of an output shaft (26) for a transport element (14 to 18).

3. The method according to Claim 1 or 2, **characterized in that** the feature characterizing the feed travel is the time difference between the signals taking into account a predefined feed rate.

4. The method according to Claim 3, **characterized in that** the control unit (32) generates the release signal if the end signal is generated within the time difference, which takes into account a predefined tolerance, at least after a predefined time.

5. The method according to one of Claims 1 to 4, **characterized in that** a positioning of spindles (5, 7 to 10) of the tools or an adjustment of the transport elements when the spindles (5, 7 to 10) are running are allowed with the release signal.

6. The method according to one of Claims 1 to 5, **characterized in that** the signals characterizing the feed travel of the workpiece (1) are compared with signals of a frequency converter of a feed motor (24) of the processing machine in the control unit (32).

7. The method according to one of Claims 1 to 6, **characterized in that** the workpiece (1) raises the feed rollers (14 to 18) with its front end in the transport direction (6), wherein the relevant feed rocker (19) pivots upwards and that the sensor (29, 30) is switched off with the upwards pivoting of the feed rocker.

8. The method according to Claim 7, **characterized in that** upon leaving the feed roller (15) the relevant feed rocker (19) pivots downwards and as a result, the sensor (29, 30) is switched on and that with the lowering of the inlet-side feed roller (15), the monitoring by means of a third sensor (31) is started.

9. The method according to Claim 8, **characterized in that** with each raising of the inlet-side feed roller (15) the first sensor (29) is switched off and the monitoring is re-initialized.

10. A processing machine for carrying out the method according to one of Claims 1 to 9 with feed elements (14 to 18), by means of which the workpiece (1) can be transported through a machinery space of the processing machine, **characterized in that** a first sensor (29) is arranged in the inlet region of the processing machine by means of which the rear end of the workpiece (1) in the transport direction (6) is detected, **in that** a second sensor (30) is arranged in the outlet region of the processing machine by means of which the rear end of the workpiece (1) in the transport direction (6) is detected after the workpiece (1) has covered a certain feed travel determined by the distance of the two sensors (29, 30), **in that** a third sensor (31) is provided for detecting the theoretical feed travel of the workpiece (1) through the processing machine and that the sensors (29 to 31) are connected to a control unit (32) which evaluates the sensor signals transmitted by the sensors (29 to 31) and generates a release signal when the machinery space is free from workpieces (1).

11. The processing machine according to Claim 10, **characterized in that** the feed elements (14 to 18) are feed rollers that are mounted on feed rockers (19).

12. The processing machine according to Claim 11, **characterized in that** the pivoting motion of the feed rockers (19) of an inlet-side and an outlet-side feed roller (15, 18) is used to generate the start signal and the end signal.

13. The processing machine according to Claim 12, **characterized in that** the first and the second sensor (29, 30), which is advantageously a reed switch, detect the pivoting movement of the feed rocker (19).

14. The processing machine according to one of Claims 10 to 13, **characterized in that** the sensor (29, 30) is a limit switch which is advantageously arranged fixedly with reference to the machine, and **in that** the feed rocker (19) carries a switching element (34) that cooperates with the limit switch (30).

15. The processing machine according to one of Claims 10 to 14, **characterized in that** the third sensor (31) is an inductive sensor or a rotary encoder which preferably cooperates with a switching ring (36) that is seated on a shaft (26) of the feed drive in a

## Revendications

1. Procédé de surveillance du compartiment d'une machine d'usinage sur des pièces d'œuvre (1) restées accrochées dans l'espace machine,
**caractérisée en ce que** lors du passage de la pièce d'œuvre (1) à travers l'espace machine, l'extrémité arrière de la pièce d'œuvre (1) dans la direction de transport (6) génère dans la zone d'entrée de l'espace machine un signal de départ et dans la zone de sortie un signal de fin au moyen de capteurs (29, 30) connectés sur un système de commande (32) et **en ce qu'**à partir du signal de départ, le système de commande (32) détecte un attribut caractérisant un trajet d'avance théorique et génère un signal de validation identifiant un espace machine libre de pièces d'œuvre (1), si au moment de la génération du signal de fin, la valeur de l'attribut caractéristique détecté a atteint une valeur limite prédéfinie et de préférence, n'a pas encore dépassé une valeur limite supérieure prédéfinie, ou si le signal de fin est généré à un moment auquel la valeur de l'attribut caractéristique détecté a atteint la valeur limite prédéfinie et de préférence, n'a pas encore dépassé la valeur limite supérieure, les valeurs limites étant basées sur l'écart entre le premier capteur (29) et le deuxième capteur (30) .

2. Procédé selon la revendication 1,
**caractérisée en ce que** la détection du trajet d'avance théorique de la pièce d'œuvre (1) est dérivée de la rotation d'un arbre de sortie (26) pour un élément de transport (14 à 18).

3. Procédé selon la revendication 1 ou 2,
**caractérisée en ce que** l'attribut caractérisant le trajet d'avance est la différence temporelle entre les signaux, sous considération d'une vitesse d'avance prédéfinie.

4. Procédé selon la revendication 3,
**caractérisée en ce que** le système de commande (32) génère le signal de validation, si dans une différence temporelle considérant une tolérance prédéfinie, le signal de fin est généré au moins après un temps prédéfini.

5. Procédé selon l'une quelconque des revendications 1 à 4,
**caractérisée en ce qu'**avec le signal de validation, un positionnement de broches (5, 7 à 10) des outils ou un ajustement des éléments de transporte lorsque les broches (5, 7 à 10) fonctionnent, sont autorisés.

6. Procédé selon l'une quelconque des revendications 1 à 5,
**caractérisée en ce que** les signaux identifiant le trajet d'avance de la pièce d'œuvre (1) sont comparés avec des signaux d'un convertisseur de fréquence d'un moteur d'avance (24) de la machine d'usinage dans le système de commande (32).

7. Procédé selon l'une quelconque des revendications 1 à 6,
**caractérisée en ce qu'**avec son extrémité avant dans la direction de transport (6), la pièce d'œuvre (1) relève les cylindres d'avance (14 à 18), le pendule d'avance (19) correspondante pivotant vers le haut, et **en ce que** par le pivotement vers le haut du pendule d'avance, la capteur (29, 30) se met à l'arrêt.

8. Procédé selon la revendication 7,
**caractérisée en ce que** lorsqu'il quitte le cylindre d'avance (15), le pendule d'avance (19) correspondant pivote vers le bas et de ce fait, le capteur (29, 30) se met en marche, et **en ce qu'**avec l'abaissement du cylindre d'avance (15) du côté entrée, la supervision au moyen d'un troisième capteur (31) démarre.

9. Procédé selon la revendication 8,
**caractérisée en ce que** lors de chaque élévation du cylindre d'avance (15) du côté entrée, le premier capteur (29) se met à l'arrêt et la supervision se réinitialise.

10. Machine d'usinage, destinée à réaliser le procédé selon l'une quelconque des revendications 1 à 9, avec des éléments d'avance (14 à 18), à l'aide desquels la pièce d'œuvre (1) est susceptible d'être transportée à travers un espace machine de la machine d'usinage,
**caractérisée en ce que** dans la zone d'entrée de la machine d'usinage est placé un premier capteur (29), à l'aide duquel l'extrémité arrière de la pièce d'œuvre (1) dans la direction de transport (6) est détectée, **en ce que** dans la zone de sortie de la machine d'usinage est placé un deuxième capteur (30), à l'aide duquel , après avoir parcouru un trajet d'avance de la pièce d'œuvre (1) déterminé par l'écart entre les deux capteurs (29, 30), l'extrémité arrière de la pièce d'œuvre (1) dans la direction de transport (6) est détectée, **en ce qu'**il est prévu un troisième capteur (31), destiné à détecter le trajet d'avance théorique de la pièce d'œuvre (1) à travers la machine d'usinage et **en ce que** les capteurs (29 à 31) sont connectés sur un système de commande (32), qui évalue les signaux de capteur transmis par les capteurs (29 à 31) et qui génère un signal de validation lorsque l'espace machine est libre de pièces d'œuvre (1).

11. Machine d'usinage selon la revendication 10, **caractérisée en ce que** les éléments d'avance (14 à 18) sont des cylindres d'avance qui sont logés sur des pendules d'avance (19).

12. Machine d'usinage selon la revendication 11, **caractérisée en ce que** le déplacement pivotant des pendules d'avance (19) d'un cylindre d'avance (15, 18) côté entrée et côté sortie sont mis à contribution pour générer le signal de départ et le signal de fin.

13. Machine d'usinage selon la revendication 12, **caractérisée en ce que** le premier et le deuxième capteurs (29, 30), qui est de préférence un interrupteur à lame détectent le déplacement pivotant du pendule d'avance (19).

14. Machine d'usinage selon l'une quelconque des revendications 10 à 13,
**caractérisée en ce que** le capteur (29, 30) est un interrupteur fin de course, placé de préférence de manière fixe sur la machine et **en ce que** le pendule d'avance (19) porte un élément de commutation (34) qui coopère avec l'interrupteur fin de course (30).

15. Machine d'usinage selon l'une quelconque des revendications 10 à 14,
**caractérisée en ce que** le troisième capteur (31) est un capteur ou un encodeur rotatif, qui coopère de préférence avec une bague de commande (36) logée de manière solidaire en rotation sur un arbre (26) de l'entraînement d'avance.
